# EUROPEAN PATENT APPLICATION

(11) **EP 4 166 849 A1**
(43) Date of publication of application: **19.04.2023**
(21) Application number: 22200918.5
(22) Date of filing: 11.10.2022
(51) Int. Cl.: F23R 3/34, F01D 25/02, F02C 7/264, F23Q 9/00, F01D 25/00

(54) **PYROLYTIC CLEANING OF COMBUSTORS**

(30) Priority: 12.10.2021 US 202117499557
(71) Applicant: Collins Engine Nozzles, Inc., West Des Moines, IA 50265 (US)
(72) Inventor: RYON, Jason, West Des Moines, IA (US)
(74) Representative: Dehns

(57) **Abstract**

A method of operating a torch ignitor for continuous ignition includes issuing a flame (105) from a combustion chamber (104) of a torch ignitor (101) into a combustor (116) of a gas turbine engine while the gas turbine engine is not issuing fuel through fuel injectors into the combustor. The method includes heating interior surfaces of the combustor with the flame, wherein heat from the flame reacts with carbon deposits on the interior surfaces to remove the carbon deposits.

## Description

### BACKGROUND

### 1. Field

The present disclosure relates to continuous ignition systems, and more particularly to torch ignitors for lighting and relighting gas turbine engines.

### 2. Description of Related Art

Carbon growth can occur in gas turbine engine combustors in which excess fuel accumulates on surfaces, and there is not enough oxygen and/or heat present to burn the fuel. This fuel can solidify on components (such as fuel injectors or the combustor liner) which if left unchecked could prevent proper operation of the device. For example, if it were not periodically maintained, the fuel nozzle could become plugged so that it no longer functions and this would cause uneven temperature distribution within the combustor. This could deteriorate performance and damage components within the hot section of the engine. To prevent these effects, routine maintenance must be performed to clean carbon build up out of the combustion components. Additionally, if left unchecked carbon deposits can break off during operation which can cause erosion of components within the hot section of the engine. Life of the fuel injector can be limited due to carbon buildup, so after a time the injector must be replaced or cleaned, and can determine the maintenance cycle. These are factors also limit how long an engine can remain on wing between when major maintenance is required.

The conventional techniques have been considered satisfactory for their intended purpose. However, there is an ongoing need to increase how long engines can remain on-wing as well as to extend the maintenance interval of the engine. There is also an ongoing need to reduce erosion and damage that may occur between maintenance cycles. This disclosure provides a solution for these needs.

### SUMMARY

A method of operating a torch ignitor for continuous ignition includes issuing a flame from a combustion chamber of a torch ignitor into a combustor of a gas turbine engine while the gas turbine engine is not issuing fuel through fuel injectors into the combustor. The method includes heating interior surfaces of the combustor with the flame, wherein heat from the flame reacts with carbon deposits on the interior surfaces to remove the carbon deposits.

The torch ignitor can be aboard an aircraft. Issuing flame and heating the interior surfaces can be performed as a cleaning cycle between flights of the aircraft. The cleaning cycle can include issuing air from a compressed air source outside the combustor into the combustor for use in pyrolyzing the carbon deposits. The compressed air source can include at least one of a compressor of the gas turbine engine, a shop air source external to the gas turbine engine, and/or a fan. Air can be channeled from the compressed air source into the combustion chamber of the torch ignitor.

Issuing the flame from the combustion chamber of the torch ignitor can be performed while maintaining the combustor and the fuel injectors assembled within the gas turbine engine. Maintaining the combustor and the fuel injectors assembled within the gas turbine engine can include maintaining the gas turbine engine assembled on an airframe.

Issuing the flame and heating interior surfaces can be performed for a period of time sufficient to remove carbon build up on the interior surfaces built up since a previous cycle of issuing the flame and heating interior surfaces. The interior surfaces can include at least one surface inside the fuel injectors, at least one surface on an exterior of the fuel injectors, at least one inside surface of an upstream combustor dome wall of the combustor, at least one surface of a radially outward facing wall of the combustor downstream of a combustor dome wall, and/or at least one surface of a radially inward facing wall of the combustor downstream of a combustor dome wall.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a schematic cross-sectional side elevation view of an embodiment of a system constructed in accordance with the present disclosure, showing the torch ignitor installed in a gas turbine engine for continuous ignition; and
Fig. 2 is a schematic cross-sectional downstream end elevation view of the torch ignitor of Fig. 1, showing the flame issuing from the torch ignitor for removing carbon deposits.

### DETAILED DESCRIPTION OF THE PREFERRED EMBODIMENTS

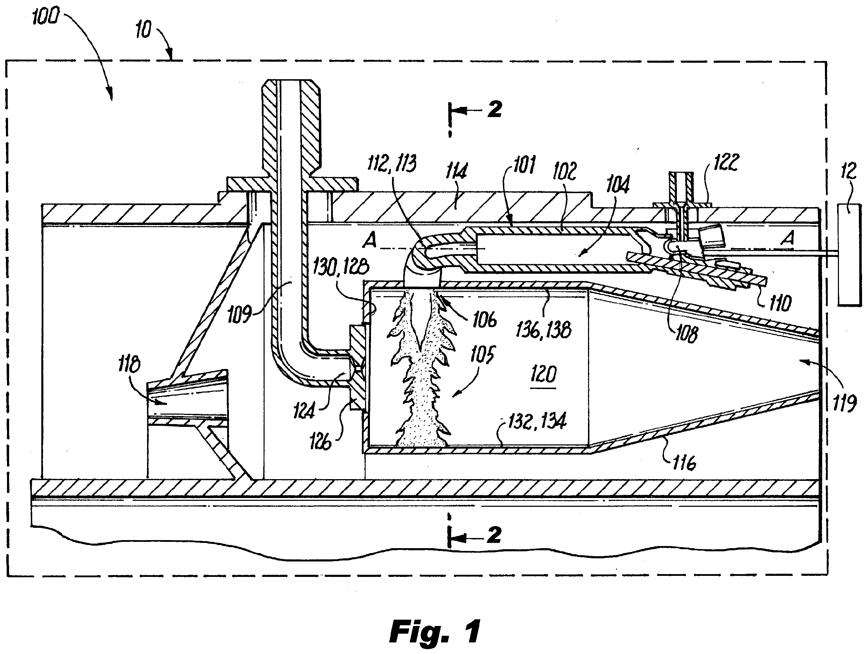

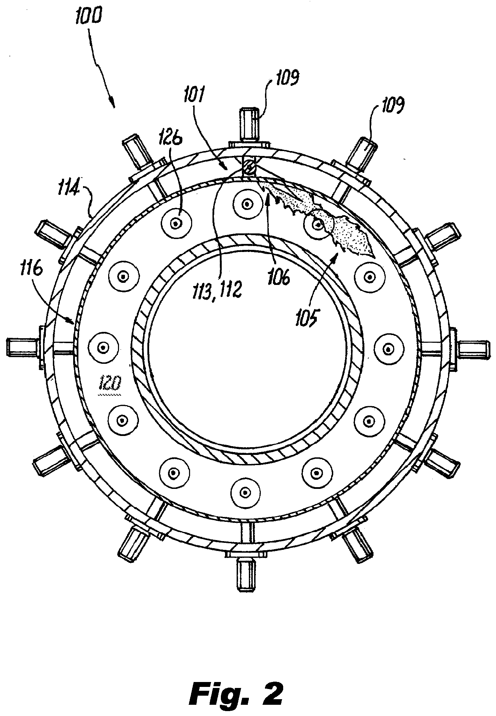

Reference will now be made to the drawings wherein like reference numerals identify similar structural features or aspects of the subject disclosure. For purposes of explanation and illustration, and not limitation, a partial view of an embodiment of a system in accordance with the disclosure is shown in Fig. 1 and is designated generally by reference character 100. Other embodiments of systems in accordance with the disclosure, or aspects thereof, are provided in Fig. 2 as will be described. The systems and methods described herein can be used to reduce and/or remove carbon deposits from surfaces of combustors in gas turbine engines.

The torch ignitor system 100 includes a torch ignitor 101 having a torch wall 102. The torch wall 102 defines a combustion chamber 104 therein with a flame outlet 106 passing out of the torch wall 102 downstream of the combustion chamber 104. A fuel nozzle 108 is mounted to the torch wall 102 to issue fuel into the combustion chamber 104. At least one ignitor 110 is mounted to the torch wall 102, positioned to ignite fuel issued from the fuel nozzle 108. An exhaust or outlet tube 112 is in fluid communication with the combustion chamber 104 extending downstream from the combustion chamber to the flame outlet 106.

The torch wall 102 is mounted to an engine case 114 of a gas turbine engine, e.g. aboard an aircraft schematically indicated with reference character 10. A combustor 116 is included within the engine case 114, e.g. for receiving compressor discharge air from an upstream compressor (not shown but the diffuser 118 of the compressor is labeled in Fig. 1), combusting fuel in the compressor discharge air, and issuing combustion products to a downstream turbine, the inlet 119 of which is labeled in Fig. 1. The flame outlet 106 is mounted in fluid communication, through outlet tube 112, with an interior combustion space 120 of the combustor 116. The combustor 116 is spaced apart from the combustion chamber 104 of the torch wall 102, so at start up or in the event of a flame out in the main combustion space 120, a flame 105 from the combustion chamber 104 can issue through the outlet tube 112 and into the combustion space 120 to light or relight the combustor 116.

The torch combustion chamber 104 is mostly isolated from the main combustor 116. The narrow outlet tube 112 acts as an isolator which limits communication between the two volumes. This isolation allows the torch combustion chamber 104 to be stable while the main combustor 116 could have strong pressure oscillations which happen during ignition, blowout, acoustic instabilities, and the like. The torch combustion chamber 104 is also generally sheltered from the main combustor flow field so recirculation patterns, high velocity zones, and the like do not make their way up into the torch combustion chamber 104.

A mounting flange 122 extends from the torch wall 102 and is mounted to the engine case 114. The ignitors 110 extend from outside the torch wall 102 and into the combustion chamber 104 for igniting a mixture of fuel and air from the fuel nozzle 108 to start up the torch ignitor system 100. The torch ignitor 101 is in addition to a plurality of main fuel injectors 109 extending through the case 114 and connecting to the combustor 116 for injection of fuel and air into the combustion space 120. An elbow 113 of the tube 112 of the torch ignitor 101 orients the outlet 106 tangential to the axial direction A, to issue the flame 105 tangentially across a portion of the annulus of the combustion space 120 as shown in Fig. 2.

With continued reference to Fig. 1, a method includes issuing a flame 105 from the combustion chamber 104 of the torch ignitor 101 into the combustor 120 while the gas turbine engine is not issuing fuel through fuel injectors 109 into the combustor 116. The method includes heating interior surfaces 124, 126, 128, 132, 136 of the combustor 116 with the flame 105. Heat from the flame 105 reacts with carbon deposits on the interior surfaces 124, 126, 128, 132, 136 to remove carbon depositions which may have accumulated on these interior surfaces 124, 126, 128, 132, 136 during operation or shutdown of the engine.

Issuing flame and heating the interior surfaces 124, 126, 128, 132, 136 are performed as a cleaning cycle between flights of the aircraft 10. The cleaning cycle includes issuing air from a compressed air source outside the combustor 116 into the combustor 116 for use in pyrolyzing the carbon deposits. The compressed air source can include a compressor of the gas turbine engine (e.g. where air is fed through the diffusor 118 while the compressor is turned by an electrical motor or the like). It is also contemplated that the compressed air source can be a fan or shop air source 12 external to the gas turbine engine. Air is channeled from the compressed air source into the combustion chamber 104 of the torch ignitor 101.

Issuing the flame 105 from the combustion chamber 104 of the torch ignitor 101 is performed while maintaining the combustor 116 and the fuel injectors 109 assembled within the gas turbine engine. Maintaining the combustor 116 and the fuel injectors 109 assembled within the gas turbine engine includes maintaining the gas turbine engine assembled on an airframe of the aircraft 10, e.g. on wing.

Issuing the flame 105 and heating interior surfaces 124, 126, 128, 132, 136 is performed for a period of time sufficient to remove carbon build up on the interior surfaces 124, 126, 128, 132, 136 built up since a previous cleaning cycle. The interior surfaces 124, 126, 128, 132, 136 can include at least one surface 124 inside the fuel injectors 109, at least one surface 126 on an exterior of the fuel injectors 109, at least one inside surface 128 of an upstream combustor dome wall 130 of the combustor 116, at least one surface 132 of a radially outward facing wall 134 of the combustor 116 downstream of a combustor dome wall 130, and/or at least one surface 136 of a radially inward facing wall 138 of the combustor 116 downstream of a combustor dome wall 130.

Potential benefits of systems and methods as disclosed herein include cleaning cycles that allow the torch system to remain on wing longer and prevents erosion of downstream components. The methods and systems of the present disclosure, as described above and shown in the drawings, provide for reducing and/or removing carbon deposits from surfaces of combustors in gas turbine engines. While the apparatus and methods of the subject disclosure have been shown and described with reference to preferred embodiments, those skilled in the art will readily appreciate that changes and/or modifications may be made thereto without departing from the scope of the invention as defined by the claims.

## Claims

1. A method of operating a torch ignitor for continuous ignition comprising:
issuing a flame (105) from a combustion chamber (104) of a torch ignitor (101) into a combustor of a gas turbine engine while the gas turbine engine is not issuing fuel through fuel injectors into the combustor (116); and
heating interior surfaces of the combustor with the flame, wherein heat from the flame reacts with carbon deposits on the interior surfaces to remove the carbon deposits.

2. The method as recited in claim 1, wherein the torch ignitor is aboard an aircraft and wherein issuing flame and heating the interior surfaces are performed as a cleaning cycle between flights of the aircraft.

3. The method as recited in claim 2, wherein the cleaning cycle includes issuing air from a compressed air source outside the combustor into the combustor for use in pyrolyzing the carbon deposits.

4. The method as recited in claim 3, wherein the compressed air source includes a compressor of the gas turbine engine.

5. The method as recited in claim 3, wherein the compressed air source includes a shop air source (12) external to the gas turbine engine.

6. The method as recited in claim 3, wherein the compressed air source includes a fan.

7. The method as recited in claim 3, wherein air is channeled from the compressed air source into the combustion chamber of the torch ignitor.

8. The method as recited in any preceding claim, wherein issuing the flame from the combustion chamber of the torch ignitor is performed while maintaining the combustor and the fuel injectors assembled within the gas turbine engine.

9. The method as recited in claim 8, wherein maintaining the combustor and the fuel injectors assembled within the gas turbine engine includes maintaining the gas turbine engine assembled on an airframe.

10. The method as recited in any preceding claim, wherein issuing the flame and heating interior surfaces is performed for a period of time sufficient to remove carbon build up on the interior surfaces built up since a previous cycle of issuing the flame and heating interior surfaces.

11. The method as recited in any preceding claim, wherein the interior surfaces include at least one surface inside the fuel injectors.

12. The method as recited in any preceding claim, wherein the interior surfaces include at least one surface on an exterior of the fuel injectors.

13. The method as recited in any preceding claim, wherein the interior surfaces include at least one inside surface of an upstream combustor dome wall of the combustor.

14. The method as recited in any preceding claim, wherein the interior surfaces include at least one surface of a radially outward facing wall of the combustor downstream of a combustor dome wall.

15. The method as recited in any preceding claim, wherein the interior surfaces include at least one surface of a radially inward facing wall of the combustor downstream of a combustor dome wall.
